# EUROPEAN PATENT SPECIFICATION

(11) **EP 0 596 835 B1**
(45) Date of publication and mention of the grant of the patent: **06.08.1997**
(21) Application number: 93810763.8
(22) Date of filing: 02.11.1993
(51) Int. Cl.: B29B 13/10, B29C 47/40, B29K 105/26

(54) **Solid state shear extrusion pulverization**
Extrusion von Polymeren in festem Zustand zur Herstellung von Pulver
Procédé de préparation de poudres de polymères par extrusion à l'état solide

(30) Priority: 03.11.1992 US 971147; 24.11.1992 US 981161; 30.06.1993 US 85198; 28.10.1993 US 140600; 28.10.1993 US 140640
(43) Date of publication of application: 11.05.1994
(73) Proprietor: ILLINOIS INSTITUTE OF TECHNOLOGY, Chicago, Illinois 60616 (US)
(72) Inventor: Shutov, Fyodor, Downers Grove Illinois 60515 (US); Ivanov, George, Chicago Illinois 60616 (US); Arastoopour, Hamid, Darien Illinois 60559 (US)
(74) Representative: Feldmann, Clarence Paul

(56) References cited:
- WO-A-91/14552
- CH-A- 334 404
- CH-A- 456 937
- DE-A- 3 332 629
- DE-A- 4 021 550
- DE-C- 4 130 315
- FR-A- 2 196 242
- GB-A- 1 184 717
- US-A- 4 041 115
- US-A- 4 408 888
- US-A- 4 607 796

## Description

This invention relates to a solid state shear extrusion process as described in the preamble of claim 1 and an apparatus for solid state shear pulverization in accordance with claim 8. The process and apparatus of the invention is well suited for fine pulverization of polymeric materials. The process and apparatus of this invention is especially useful for recycling of synthetic and natural polymers and mixed polymer wastes using a noncryogenic and low power consumption technique.

Currently, three basic reclaiming processes of virgin and used plastics are practiced: Chemical, which include chemical treatment, as well as, pyrolysis, hydrolysis, and incineration; Physical, which include melting and subsequent extrusion, injection molding, and pressure molding; and Mechanical, which include granulation, densification, agglomeration, and pulverization. Presently used processes have disadvantages of high energy consumption, deterioration of original properties of the polymers, applicability to only specific polymers, and environmental undesirability.

Natural and synthetic polymer wastes are increasing and environmental concerns about their disposition render recycling necessary. Thermoplastic polymers, particularly polyethylene, and thermosetting polymers, particularly foamed polyurethane, have large commercial uses and provide a large source of material for potential recycling. Currently most polyurethane waste ends up in landfills where it is resistant to decomposition or in waste burners where it produces highly toxic gaseous products. Many reclamation processes to date have been limited to certain types of wastes and particularly limited with respect to mixed wastes, have been uneconomical, particularly With respect to energy consumption, and have not provided reclaimed material in a form conducive to reuse manufacturing.

The document FR-A-2916242 relates to a process for solid state shear extrusion pulverization of synthetic and natural polymeric material comprising the step of applying normal and shear forces sufficient to form fine powder of said polymeric material by generally converging conically shaped counter-rotating meshing screws rotated at 62 RPM which is in the range of 4 to about 90 RPM.

It is the object of the invention to improve the known process to reduce energy consumption and to achieve a very fine powder under low energy consumption conditions, it is a further specific object of the invention to prevent any agglomeration of powder. This is achieved by a process with the features of claim 1.

It is a further object of the invention to provide an apparatus able to operate with lower pressures and temperatures to reduce energy consumption, and being able to operate a process in accordance to claim 1. This is achieved by an apparatus in accordance with claim 8. Further advantages of the process and the apparatus are described below.

Solid state shear extrusion pulverization according to this invention requires low energy input, about one fifth the energy required in presently used cryogenic pulverization, and provides finer and more uniform powders, than pulverization techniques presently known to the inventors, which may be used in a broader range of re-use or end use manufacture.

This invention provides a low energy consumption process and apparatus for pulverization of a wide variety of natural and synthetic polymeric materials to fine powders. This invention also provides a process and apparatus suitable for economical recycling of a wide variety of natural and synthetic polymer wastes, particularly polyethylene, polyurethane, and foams, including mixed wastes, by solid state shear extrusion pulverization of such waste materials forming fine powders suitable for use in new product production. This invention provides fine polymeric particles useful for coating and preservation of metals, stones and concretes, such as used in monuments, buildings, and bridges, and concrete pipes and materials exposed to corrosive environments. The object is to provide a substitute for liquid paints and coatings based upon organic non-environmentally friendly solvents with fine particles coatings which are more durable, stable and environmentally safe when applied to surfaces, especially metal and porous mineral surfaces. In one embodiment, the process and apparatus of this invention may be used to enhance reactivity of polymeric and solid monomeric materials in the formation of homopolymers, copolymers and polymeric materials not achievable by prior processing methods of reaction.

The invention is preferably carried out by heating a thermoplastic polymeric material, which thermally softens at a lower temperature than its melting temperature, to a softening or pre-melt temperature below its melting point, cooling the material and applying normal and shear forces sufficient to form fine powder of the polymeric material, and fluidizing the fine powder with further cooling in a gas stream thereby preventing agglomeration in materials having tendency to agglomerate. The heat applied to the materials decreases the physical bonds between macromolecules and enhances mechanical deformations. Suitable forces may be applied by application of torque up to about 40 MKg and pressure up to about 1.03·10⁶ Pa [150 psi]. Powders having a major portion of the particles with a weight average size of about 300 to about 900 microns can be produced in a single pass. Multiple passes by reprocessing through the same apparatus, or by passing through at least one additional similar apparatus, of oversized particles can result in a weight average particle size of 100 microns and less. The invention may be carried out on a continuous basis in a solid state shear extrusion pulverizer having a hollow generally converging barrel housing a generally converging twin screw extruder having generally converging conical meshing screws in at least the powder formation zone. Feed means are provided to feed polymeric material to a first zone at one end of the barrel and discharge means are provided for removal of pulverized powder from a fourth or expanding zone at the opposite end of the barrel. The materials screw feed in the first zone. Heating means are provided for heating the polymeric material to a pre-melt or softening temperature in the second zone. Suitable pre-melt or softening temperatures are those at which the material is softened and can be shaped by the extruder but not melted. These temperatures depend upon the polymer materials used and are readily ascertained by one skilled in the art. For most polymeric materials, heating to about 60° to about 300°C and below the melting point of the polymer is suitable. Cooling means are provided for cooling the polymeric material from the pre-melt temperature to temperatures below the softening point of the material in a third zone adjacent the second zone. The temperature to which the material is cooled is again dependent upon the polymeric materials used and will be readily ascertained by one skilled in the art. For most polymeric materials, cooling to about 20° to about 100°C is suitable. Means for applying normal and shear forces sufficient to form fine powders are provided in a third zone located between the second and fourth zones. Means are provided for fluidizing and further cooling the fine powder in a gas stream preventing its agglomeration in the latter portion of the third zone and in the fourth zone. Increase of the barrel diameter and increase in distances between the screw flights in the fourth zone contribute significantly in preventing agglomeration of materials and final production of fines. Means may be provided for separating produced particles over a preset desired size and returning these oversized particles for reprocessing through the same apparatus or passing the oversized particles to another similar apparatus for reprocessing to obtain desired small weight average size particles. Separation of oversized particles and reprocessing may be repeated several times to achieve desired very small particle sizes. Use of a plurality of apparatuses provides continuous production of desired small particle size powder and allows the most advantageous operating conditions to be used for different particle size ranges. This embodiment utilizes low pressure and temperatures closer to ambient than prior processes with the major amount of supplied energy to the process to create normal and shear stresses on the particles to result in the very fine powder with low energy input. The process and apparatus of this embodiment of the invention are applicable to a variety of polymers, particularly thermoplastic polymers such as, low density polyethylene, rubber, mixtures of low density polyethylene and rubber, and low density polyethylene and wood, and copolymers.

The solid state shear extrusion pulverization of thermosetting polymeric materials, such as polyurethane, polyisocyanurate, epoxy and phenolic polymers; crosslinked thermoplastic polymeric materials, such as polyethylene, polypropylene and polyvinyl chloride; foams; and natural polymers, such as wheat, corn and wood, leads under ambient or near ambient temperatures and pressures, to result in powders having very fine particle size. In this embodiment, application of normal and shear forces sufficient to form fine powder of the polymeric material is is applied with conically shaped counter-rotating meshing screws. Suitable forces may be applied by torque up to about 40 MKg and pressure up to about 1.03·10⁶ Pa [150 psi]. Powders having a major portion of the particles with a weight average size of about 100 to about 900 microns can be produced in a single pass. Multiple passes by reprocessing through the same apparatus or by passing through at least one additional similar apparatus, of oversized particles can result in a weight average particle size of 100 microns and less. The process of this embodiment may be carried out on a continuous basis in a solid state shear extrusion pulverizer having a hollow generally converging barrel housing a generally converging twin screw extruder having generally converging conical meshing screws in at least the powder formation zone. Feed means are provided to feed polymeric material to a first zone at one end of the barrel and discharge means are provided for removal of pulverized powder from the opposite end of the barrel. The materials screw feed in the first zone. Heating means may provided for any desired heating of thermosetting, crosslinked thermoplastic and/or natural polymeric material in a second zone to temperatures of above ambient and below its decomposition temperature prior to applying the high normal and shear forces. Cooling means may be provided for cooling the polymeric material in a third zone adjacent the second zone to temperatures of about 20° to about 100°C immediately prior to or during applying the normal and shear forces. The thermosetting and/or crosslinked thermoplastic polymeric materials need not be heated as high as the pre-melt temperatures and cooled as described with respect to thermoplastic polymers, but may be treated at ambient temperatures, or with heating and cooling as noted above. Means for applying normal and shear forces sufficient to form fine powders may be provided in the second and/or third zone(s). Means may be provided for fluidizing and further cooling the fine powder produced from thermosetting, crosslinked thermoplastic and natural polymeric materials in a gas stream in the latter portion of the third zone and in a fourth zone to provide expansion of the powder and to facilitate discharge of the fine powder. Increase of the barrel diameter and/or increase in distances between the screw flights in the fourth zone may be used to expand the fines for easy discharge. Agglomeration has not been a problem in pulverization of thermosetting and crosslinked thermoplastic polymeric materials according to the process of this invention and, therefore, the fine powder may be discharged directly from the third zone, if desired. However, if the fine powder is damp or sticky, fluidization considerably decreases agglomeration of the fine powder. The process of the invention may use low pressure and temperatures closer to ambient than prior processes with the major amount of supplied energy to the process being utilized to create normal and shear stresses on the particles to result in the very fine powder with low energy input. In pulverization of thermoplastic polymeric materials, as described above, it was necessary to heat the polymeric material to higher temperatures than general ambient followed by cooling and application of shear and normal stresses to obtain fine pulverization. It was unexpected that the pulverization process of this embodiment could be carried out using thermosetting and crosslinked thermoplastic polymers at near ambient conditions without significant heating and cooling, as required for thermoplastic polymers described above. The conically shaped counter-rotating meshing screws used in this invention aid to provide sufficiently high shear and normal forces to produce the desired fine powder. In the process of this invention, slight heating followed by cooling may be used to generally facilitate the processing. Reprocessing of oversized particles of the produced powder may be carried out as described above.

The fine polymeric powder produced by the process and apparatus of this invention enables much broader end uses as fillers and reinforcement agents in many types of matrices, such as polymer, ceramic, gypsum, concrete, and asphalt. This is important to practical utilization of products of recycling polymer wastes, both pre- and/or post-consumer, to reduce the environmental problems caused by such solid wastes.

The above mentioned and further advantages of the invention will be apparent upon reading the preferred embodiments and reference to the drawings, wherein:
Fig. 1 is a longitudinal sectional view showing four zones of a conical counter-rotating screw apparatus according to one embodiment of this invention;
Fig. 2 is an end view of the apparatus shown in Fig. 1;
Figs. 3A and 3B are scanning electron micrographs of polyurethane powder obtained according to this invention from rigid (3A) and high-resilient (3B) polyurethane wastes, respectively; and

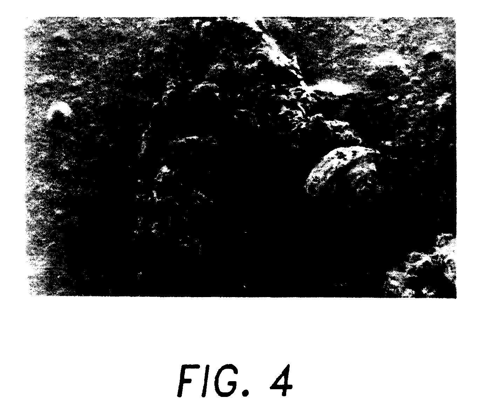

Fig. 4 is a scanning electron micrograph of rubber powder obtained by the process of this invention from used automobile tires.

In the process of solid state shear extrusion pulverization according to this invention, polymeric granules, flakes or shreds of virgin or used synthetic or natural polymer, copolymer and homopolymer materials, or a mixture of such materials, are fed by any suitable feed means to a first zone at the large end of a hollow generally converging barrel housing a generally converging twin screw extruder having generally converging conical meshing screws. By the terminology "generally converging", it is meant that the cross section of the feed ends of the barrel and the screws are larger than the opposite discharge ends and in the powder formation zone, the convergence is continuous, forming conical screws in at least that zone. This terminology is intended to allow a larger shaped end section and smaller central sections, for example to accommodate bearing means. Generally, the screws may be cylindrical in the feed zone, have a definite conical convergence in the powder formation zone, and provide an expansion cross sectional area in the fourth or fluidizing zone. In preferred embodiments, continuously converging conical screws are used for the entire length of a barrel having converging walls in the powderization zone followed by diverging walls in the cooling/nonagglomerating zone.

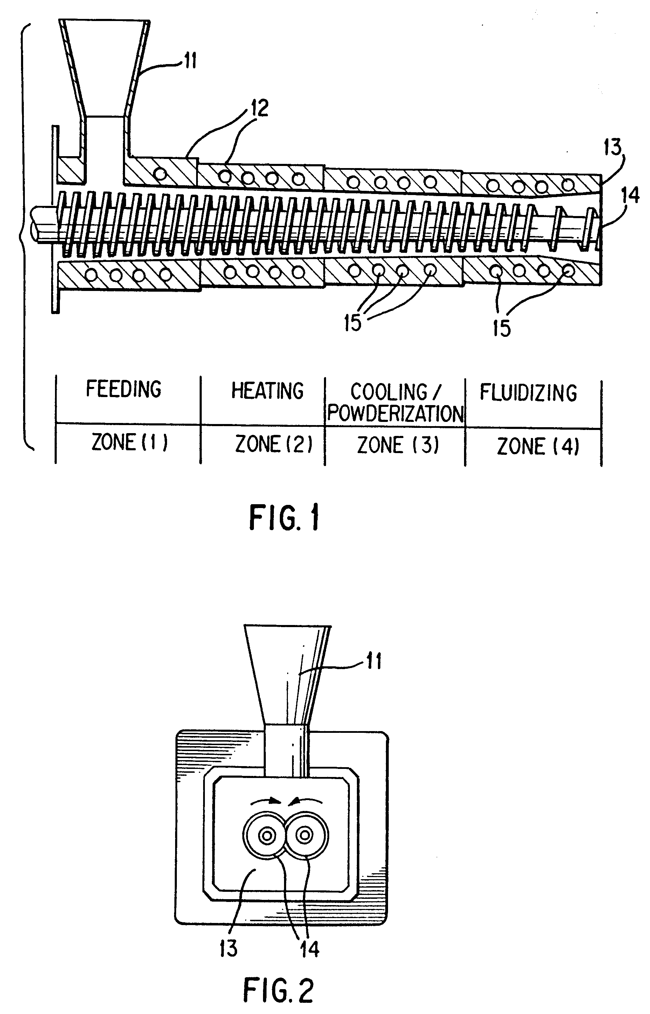

Fig. 1 is a longitudinal sectional view of an apparatus according to this invention showing feed hopper 11 for feeding polymer materials to feeding zone 1 within barrel 13 housing screws 14. Heaters 12 are provided in barrel walls in the region of heating zone 2. Cooling conduits 15 are provided in barrel walls in the region of cooling/powderization zone 3 and may be provided in the region of cooling/nonagglomerating zone 4. Increase in the diameter of the barrel opening in cooling/nonagglomerating zone 4 is shown. Also, increase in spacing of the flights on screw 14 in cooling/nonagglomerating zone 4 is shown. Figure 2 shows the counter rotation of screws 14 within barrel 13.

The polymeric feed material may be fed to the first zone in a size range equal or less than the distance between screw flights and their depths, preferably about 1 mm to about 6 mm. Size reduction to these dimensions may be achieved by many methods known to the art. When materials recalcitrant to fine pulverization are present alone, it is desirable to form a mixture of such materials with at least one material which is readily pulverized to the desired fine particles by the process of this invention. Minor amounts of readily pulverized materials, about 5 to about 50 volume percent, depending greatly upon the materials, may be mixed with such recalcitrant materials to result in fine powder formation according to this invention. To accommodate recycling of waste polymeric materials, it may be desirable to have present minor amounts, up to about 30 volume percent, of pulverizable materials.

In the first embodiment of this invention, preferred polymeric materials are those of the type which thermally soften at a lower temperature than their melting temperature, thermoplastic polymers, such as polyethylene terephthalate, high-density polyethylene, low-density polyethylene, polypropylene, polyvinyl chloride, polystyrenes, polyacrylics, polycarbonates, and polyamides. Mixtures of these materials or composites may be used. Heating means capable of heating the polymeric material in the second or heating zone to a softening or pre-melt temperature which is below its melting point are located in a suitable manner to achieve the desired temperature, at which a small shear stress may result in high deformation. Preferred temperatures are about 3° to about 50°C below the melting point of the polymeric material. Any suitable heating means known to the art may be used, for example, the barrel may be electrically heated or a fluid heating jacket surrounding the barrel may be used in this region. In the second or heating zone where heating to a pre-melt temperature takes place, the meshing screws serve primarily to convey the material through the zone with an appropriate residence time to achieve the desired heating prior to entry to an adjacent cooling/powderization zone. Cooling means capable of cooling the pre-melt polymeric material in the third or cooling/powderization zone to a temperature below the softening temperature of the material are located in a suitable manner to achieve the desired temperature. Any suitable cooling means known to the art may be used, for example, a fluid, liquid or gas, cooling jacket surrounding the barrel, dry ice, or the like, may be used in this region. In the early portion of the length of the third zone where cooling from the higher temperature takes place, the meshing screws serve primarily to convey the material through this region with an appropriate residence time to achieve the desired cooling. Cooling in the third zone forms thin solid film material and imparts very high normal and shear stresses in the thin film material. A pressure of about 0 to about 1.03·10⁶ Pa [150 psi] may be maintained in this portion of the barrel. Concurrently with formation of these high normal and shear stresses in the material in the third zone, it is desired that the meshing screws be conically shaped and mated to provide additional normal and shear stresses to the material sufficient to form fine powder. In preferred embodiments, the torque is about 2 to about 10 MKg. In preferred embodiments, the weight average fine powder particle sizes are less than about 250 microns and with reprocessing of the oversize fraction weight average particle sizes of less than 100 microns can be obtained. The very fine powder is passed to the fourth zone where the cross sectional open area barrel is expanded and gas introduced sufficient to fluidize the powder to prevent agglomeration and to convey the powder through a discharge means in the fourth zone. Any gas which is not chemically reactive with the powder material may be used as a fluidizing gas. Air at ambient temperature is a preferred fluidizing gas which additionally cools the powder. The fluidizing gas may be introduced to the hollow barrel in the third and fourth zones by any suitable method known to the art. The cross sectional open area may be suitably expanded by reduction of the cross sectional area of the screw, increase in distance between flights of the screw, or by reduction of the taper or actual divergence of the barrel housing. The fluidized very fine powder may be discharged from a suitable opening in the barrel housing.

The process and apparatus of this first embodiment has been described with emphasis on synthetic and natural polymer recycling. The same process and apparatus may also be used to enhance reactivity of polymeric and solid monomeric materials. Under the conditions of pressure and shear to form very fine powders, as described above, the coefficients of diffusion and mass transfer increase by several orders of magnitude and new properties are imparted to the material. Thus, at the moment of shear, reactions of polymerization, polycondensation, polyaddition with formation of high molecular weight compounds takes place as more fully described in the article by Nikolai S. Enikolopian, "Some Aspects of Chemistry and Physics of Plastic Flow", Pure & Appl. Chem., Vol. 57, No. 11, pp. 1707-1711, (1985), incorporated herein by reference in its entirety. The reactions as described by Enikolopian are enhanced by use of the conical meshing screws in the powder formation zone, as described in this invention. The process for enhancement of reactivity of polymeric and solid monomeric materials is conducted by heating the material to a pre-melt temperature, cooling the material and applying normal and shear forces sufficient to form fine powder. Homopolymers, copolymers and new polymeric materials may be formed by use of the process and apparatus of this invention.

Generally, high resilient, flexible and rigid thermosetting, crosslinked thermoplastic and natural polymeric materials and their mixtures may be used in the second embodiment of the process of this invention. The second embodiment of the process of this invention is particularly suitable for foam materials. Suitable crosslinked thermoplastic polymeric materials include crosslinked polyethylene, polypropylene and polyvinyl chloride, particularly their foams. Suitable thermosetting polymeric materials include low density, 20 to 100 Kg/m³, rigid, flexible and high resilient polyurethane, as well as polyisocyanurate and resol phenol-formaldehyde and epoxy polymers, particularly their foams. Natural polymers such as wood, wheat and corn may be used. Mixtures of these materials or composites may be used. Heating means capable of heating the thermosetting, crosslinked thermoplastic or natural polymeric material in the second or heating zone may be located in a suitable manner to achieve the desired above ambient and below the decomposition temperature, which upon cooling the polymeric material provides additional shear stress to result in high deformation. Generally temperatures up to about 225°C are suitable to facilitate powderization according to this embodiment of the invention, but with some thermosetting, crosslinked thermoplastic and natural polymeric materials powderization is not benefitted by heating and cooling which may be omitted from the process and apparatus in those cases. The heating and cooling means may be inactivated when using thermosetting, cross-linked thermoplastic and natural polymeric materials for which heating and/or cooling is not desired for specific materials, or may be completely eliminated when the apparatus is to be used solely for these materials. When using thermosetting, crosslinked thermoplastic or natural polymeric materials, the temperature in the second zone may be at or near ambient, or the material may be heated to about 25° to about 225°C, preferably about 75° to about 200°C. Any suitable heating means known to the art may be used, for example, the barrel may be electrically heated or a fluid heating jacket surrounding the barrel may be used in this region. In the second or heating zone, the meshing screws serve primarily to convey the material through the zone with an appropriate residence time to achieve the desired heating prior to entry to an adjacent cooling/powderization zone. Cooling means immediately prior to or during pulverization in the third or cooling/powderization zone capable of cooling to about 20° to about 100°C, and preferably about ambient to about 45°C, polymeric material heated in the second zone, may be located in a suitable manner to achieve the desired temperature. Any suitable cooling means known to the art may be used, for example, a fluid, liquid or gas, cooling jacket surrounding the barrel or direct barrel cooling may use chilled water or cold air in this region. In the upstream portion of the length of the third zone where cooling from the higher temperature takes place, the meshing screws serve primarily to convey the material through this region with an appropriate residence time to achieve the desired cooling. Cooling of thermosetting, crosslinked thermoplastic and natural polymeric materials in the third zone imparts normal and shear stresses in the thin solid material. A pressure of about 0 to about 1.03·10⁶ Pa [150 psi] may be maintained in this portion of the barrel. Concurrently with formation of these normal and shear stresses in the third zone and in an adjacent upstream end of the fourth zone, it is desired that the meshing screws be conically shaped and mated to provide additional normal and shear stresses to the material sufficient to form fine powder. Up to about 40 MKg torque is obtained in the process of this invention, generally about 0.2 to about 8 MKg torque is suitable in this embodiment. The very fine powder is passed to the fourth zone where the cross sectional open area barrel is expanded and gas introduced sufficient to fluidize the powder to convey the powder through a discharge means in the fourth zone. We have not found agglomeration of powder produced from thermosetting, crosslinked thermoplastic and natural polymers to be a problem. However, if the material is damp or sticky, agglomeration may become a problem which fluidization will reduce. Any gas which is not chemically reactive with the powder material may be used as a fluidizing gas. Air at ambient temperature is a preferred fluidizing gas which additionally cools higher temperature powder. The fluidizing gas may be introduced to the hollow barrel in the fourth zone by any suitable method known to the art. The cross sectional open area may be suitably expanded by reduction of the cross sectional area of the screw, increase in distance between flights of the screw, or by reduction of the taper or actual divergence of the barrel housing. The fluidized very fine powder may be discharged from a suitable opening in the barrel housing.

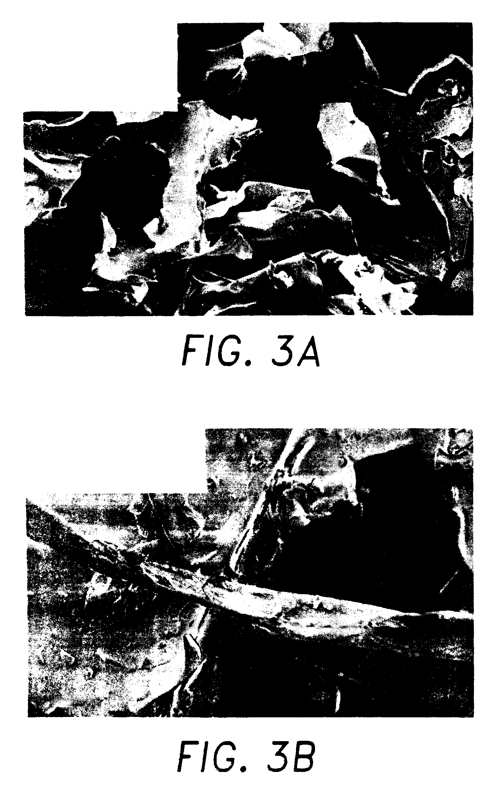

In many cases, the average fine powder particle sizes obtained using the process and apparatus of the second embodiment of this invention is less than about 150 microns. Figs. 3A and 3B are scanning electron micrographs of powder from rigid and high-resilient polyurethane foam wastes treated as more fully described in the Examples. It is seen that the fine particles of polyurethane are elongated shapes with a diameter:length, or aspect ratio, of 1:2 to 1:5 rendering them particularly well suited for filler/reinforcing agents to improve the strength, durability and lifetime of manufactured materials.

The conically shaped meshing screws and processing parameters must be designed to provide sufficient residence time for formation of powder from a substantial portion of the material in the third zone and to provide necessary stresses to the material to achieve formation of the very fine powder of the above defined sizes. We have found that the conical shape and counter-rotation of the screws aid in imparting desired high stresses to the polymeric material. Drive means as known to the art are provided to rotate the opposing screws at about 4 to about 90 RPM, preferably about 8 to about 75 RPM.

For reprocessing, means are provided for passing at least separated oversized formed particles back to the feed means of the same solid state shear extrusion pulverizer or to another similar apparatus for reprocessing. A plurality of similar apparatus may be used in series to provide continuous production and use of most advantageous operating conditions for different size particles. In preferred embodiments, separation of produced particles over a preset desired size may be achieved by any suitable sizing means, such as a sieve, and oversized particles conveyed by any suitable means to the feed means of a solid state shear extrusion pulverizer as described above. Using reprocessing, a powder having particles of weight average size of less than 100 microns can be readily achieved.

The aspect of this invention relating to fluidizing pulverized powder in a gas stream following pulverization to prevent its agglomeration and for control of discharge from the apparatus is applicable to any process for solid state pulverization by shear extrusion. The fluidizing is carried out in an expanding volume which may be provided by a diverging chamber and by providing larger distances between flights of a screw passing through such a fluidized zone. It may be further desired that the fluidized powder is cooled in an expanding volume zone. These features aid in expanding the powder from a packed bed condition to a fluidized bed condition releasing forces from the contacting particles and basically float them, significantly preventing agglomeration and providing controlled discharge of the finely powdered material.

The following examples are set forth using specific materials, apparatus and process conditions, to further explain the invention and should not be condsidered to limit the invention in any way.

### Example I

Low density polyethylene of 55 melt flow index in granules about 5mm in size were fed to the first zone at the large end of a continuously converging barrel housing two continuously converging conical shaped non-modular meshing screws, as shown in Fig. 1. The conical screws had a length of 355.6 mm [14 inches] and diameter range of 42.4 mm to 25.4 mm [1.67 inch to 1] inch and were driven by a geared electric motor in counter rotation at 45 RPM. Pressure in the barrel was slightly below atmospheric in the heating zone and atmospheric in the cooling and powder formation zones. Torque was between 7.0 and 8.0 MKg. The temperature at a location close to the barrel wall in the heating or zone 2 was maintained at 80°C by electric heaters to heat the low density polyethylene to the desired pre-melt temperature below its melting point of 118°C. Cooling was provided to zone 3 by chilled water jackets surrounding the barrel housing to cool the polyethylene to 30°C at the barrel wall. Room temperature air was added to the end portion of zone 3 to fluidize and further cool the powder. About 30 percent of the resulting powder was comprised of particles smaller than 177 microns. Except for small quantities, about 15 percent or less, the remaining larger particles were not larger than 700 microns.

### Example II

The low density polyethylene powder produced in Example I was reprocessed through the same apparatus and under the same operating conditions as Example I, except the torque was between 2 to 4 MKg. Reprocessing significantly reduced the particle size with about 80 percent of the recycled particles being smaller than 177 microns. Excluding about 6 percent of the particles which were slightly larger than 425 microns, the remaining 94 percent of the particles had a weight average particle size of about 130 microns. It can be expected that by reprocessing the larger particles, greater than about 200 microns, the average particle size would again be significantly reduced. A practical goal would be sufficient reprocessing to reduce the weight average particle size to less than 100 microns.

### Example III

Low density polyethylene of 35 melt flow index in granules of 5 mm size were fed to the first zone at the large end of a continuously converging barrel housing two continuously converging conical shaped non-modular meshing screws as shown in Fig. 1. The conical screws had a length of 355.6 mm [14 inches] and diameter range of 42.4 mm to 25.4 mm [1.67 to 1 inch] and were driven by a geared electric motor in counter rotation at 45 RPM. The pressure in the barrel was slightly below atmospheric in the heating zone and atmospheric in the cooling/powder formation zone. Torque was 7.5 to 10 MKg. The temperature at the barrel wall in the heating or zone 2 was maintained at 75°C by using electric heaters to heat the low density polyethylene to the desired temperature below its melting point of 118°C. Cooling was provided to zone 3 by chilled water jackets surrounding the barrel housing to cool the polyethylene powder to 30°C at the barrel wall. Cool air was supplied to zone 4 to fluidize and cool the polyethylene powder. About 10 percent of the resulting polyethylene powder had an average particle size smaller than 250 microns. It is believed that significant bypassing and reagglomeration of the produced powder occurred using the laboratory-scale apparatus.

### Example IV

Low density polyethylene particles which were produced in Example III were reprocessed through the same apparatus under the same conditions as Example III, except the torque ranged from 1.0 to 3.0 MKg. The single recyle significantly reduced the particles sizes with more the 50 percent of the resulting reprocessed particles smaller 250 microns. The weight average size of more than 70 percent of the particles that were less than 425 microns was about 140 microns. Further reduction in particle size would be expected by further reprocessing of the larger particles.

### Example V

Composite materials based on edge trim trial chopping samples from polyester fabrics and polyvinyl chloride film of 20 x 20 mm size were fed to the first zone at the large end of a converging barrel housing two continuously converging conical shaped non-modular meshing screws, as shown in Fig. 1. The conical screws had a length of 355.6 mm [14 inches] and diameter range of 42.4 mm to 25.4 mm [1. 67 to 1 inch] and were driven by a geared electric motor in counter rotation at 55 RPM. Torque was between 1.5 and 3.0 MKg. The temperature in the barrel wall in heating zone 2 was maintained at 200°C in the first portion and 235°C in the latter portion using electric heaters to heat the material to the desired pre-melt softening temperature just below the polyester melting temperature of 262°C. Cooling was provided to zone 3 by chilled water jackets surrounding the barrel housing to cool the powder to 30°C at the barrel wall. Room temperature air was added to zone 4 to fluidize and cool the powder. About 23 percent of the particles resulting from processing of the composite materials were smaller than 425 microns and about 22 percent of the particles were larger than 1500 microns.

### Example VI

The particles produced in Example V by a single pass through the apparatus were reprocessed in a second pass through the same apparatus under the same operating conditions as Example V. The reprocessed particles had a considerably smaller size with about 32 percent of the particles smaller than 425 microns and only about 8 percent of the particles larger than about 1500 microns.

### Example VII

High-resilient polyurethane foam waste scraps having irregular shapes and sized about 15 to 25 mm, apparent density of 2 lb/ft³ or 32 kg/m³, were fed to the first zone at the large end of a continuously converging barrel housing two continuously converging conical shaped non-modular meshing screws, as shown in Fig. 1. The conical screws had a length of 355.6 mm [14 inches] and diameters from 42.4 mm [1.67 inch] at the large end to 25.4 mm [1.0 inch] at the small end and were driven by a geared electric motor in counter rotation at 45 RPM. Torque was between 3.0 and 5.0 MKg. A gage pressure of 0.10 MPa was maintained within the barrel in heating zone 2 and atmospheric pressure was maintained in the cooling and powder formation zone 3. The temperature at a location close to the barrel wall in zone 2 was maintained at 100°C by electric heaters. Cooling was provided to zone 3 by chilled water jackets surrounding the barrel housing to cool the polyurethane powder to 45°C near the barrel wall. The resulting polyurethane powder had an average size of 147 microns with about 50 percent of the particles less than 150 microns and 10 percent larger than 250 microns. No particles of 400 microns or larger were produced

### Example VIII

The same polyurethane foam waste scraps as used in Example VII were fed to the same apparatus as used in Example VII except that no external heating was applied to zone 2 and no external cooling was applied to zone 3. The conical screws were driven in counter rotation at 66 RPM. Torque was 4.8 to 6.0 MKg. A gage pressure of 0.10 MPa was maintained in zone 2 and atmospheric pressure maintained in zones 3 and 4. Room temperature air was added to the downstream end of zone 3 to fluidize the fine powder for removal from the apparatus. The resulting powder had an average size of 205 microns and a size range of 150 to 260 microns. The fine powder particles from high-resilient polyurethane foam have elongated shapes with an aspect ratio of 1:2 to 1:5, as shown in the scanning electron micrographs of Figs. 3A and 3B. In this example, the heat generated due to friction and the heat loss to the surroundings and polyurethane materials resulted in material at a temperature of 85°C in heating zone 2 and 65°C in cooling zone 3. Unexpectedly, the rate of heat generation due to friction and heat loss to surroundings provides a temperature range suitable to produce fine powders with elongated shapes similar to fibers. Elimination of the requirement for external heating and cooling results in considerable process savings.

### Example IX

Low density flexible polyurethane foam waste having particles of irregular shapes and sized about 1 mm was fed to the same apparatus as used in Example VII. The conical screws were driven in counter rotation at 90 RPM. Torque was between 5 and 7 MKg. The temperature at a location close to the barrel wall in zone 2 was maintained at 100°C by electric heaters. Cooling was provided to zone 3 by chilled water jackets surrounding the barrel housing to cool the polyurethane powder to 25°C near the barrel wall. Room temperature air was added to the downstream end of zone 3 to fluidize the fine powder and to further cool the powder. The resulting polyurethane powder had an average size of 115 microns. More than 90 percent of the particles were sized less than 200 microns. No particles larger than 300 microns were obtained.

### Example X

High density polyurethane foam waste having particles of irregular shapes and sized about 1 mm, was fed to the same apparatus as used in Example VII. The conical screws were driven in counter rotation at 55 RPM. Torque was between 5 and 7 MKg. The temperature at a location close to the barrel wall in zone 2 was maintained at 100°C by electric heaters. Cooling was provided to zone 3 by chilled water jackets surrounding the barrel housing to cool the polyurethane powder to 25°C near the barrel wall. Room temperature air was added to the downstream end of zone 3 to fluidize the fine powder. The resulting powder had an average size of 135 microns. About 80 percent of the particles were less than 200 microns and 25 percent of the particles less than 100 microns.

### Example XI

Cross-linked polyethylene foam scraps with irregular shapes and sized about 15 to 25 mm, apparent density of 1.2 lb/ft³ or 20 kg/m³, were fed to the same apparatus as used in Example VII. The conical screws were driven in counter rotation at 45 RPM. Torque was between 5 and 7 MKg. The temperature at a location close to the barrel wall in zone 2 was maintained at 65°C by electric heaters. Cooling was provided to zone 3 by chilled water jackets surrounding the barrel housing to cool the powder to 25°C near the barrel wall. The resulting powder had about 23 percent of the particles less than 425 microns and 45 percent of the particles larger than 800 microns. Less than 5 percent of the particles had sizes less than 177 microns.

### Example XII

Cross-linked polyethylene foam particles produced in Example XI were recycled through the same apparatus and under the same operating conditions as Example XI, except at a lower torque range of 3 to 6 MKg and higher screw rotation of 90 RPM. The reprocessing significantly reduced the particles sizes with the resultant powder containing no particles larger than 800 microns. More than 80 percent of the particles were smaller than 425 microns and about 35 percent of the particles were smaller than 177 microns. It is expected that reprocessing the larger particles, over about 200 microns, would reduce the particle size substantially as a function of the number of passes of oversized particle through the apparatus.

### Example XIII

Rubber granules from used automobile tires of 6 mm in size were fed to the first zone at the large end of a continuously converging barrel housing two continuously converging conical shaped non-modular screws, as shown in Fig. 1. The conical screws had a length of 355.6 mm [14 inches] and diameter range of 42.4 mm to 25.4 mm [1.67 to 1 inch] and were driven by a geared electric motor in counter rotation at 77 RPM. The pressure within the barrel was less than 0.07 MPa in the heating zone and atmospheric in the cooling-powder formation zone. Torque was between 1.5 and 2.5 MKg. The temperature at the barrel in the heating zone was maintained at 220°C in the first portion and 180°C in the latter portion using electric heaters to heat the rubber to the desired temperature. Cooling was provided to zone 3 by chilled water jackets surrounding the barrel housing and cool air was added to zone 4 to fluidize and cool the powdered rubber to 50°C at the barrel wall. Fig. 3 is a scanning electron micrograph of rubber powder produced by the process of this Example showing particles as small as 20 microns.

Using a pilot scale solid state shear extruder, it is expected that, with better materials and more accurate and uniform clearance between the screws and the barrel, the result will be a significant reduction, or probable elimination, of bypassing particles. Further, sieves were used in the particle size distribution analysis which, in general, resulted in larger apparent particle sizes due to agglomeration and improper orientation of the particles on the sieves during shaking of the trays.

## Claims

1. A process for solid state shear extrusion pulverization of synthetic and natural polymeric material, wherein said polymeric material is thermosetting and its foams, thermoplastic, elastomeric natural polymers, or mixtures thereof, comprising the step of applying normal and shear forces sufficient to form fine powder of said polymeric material by generally converging conically shaped counter-rotating meshing screws rotated at about 4 to about 90 RPM, characterized in that said fine powder is fluidized in a gas stream for conveyance of said powder from said meshing screws.

2. A process for solid state shear extrusion pulverization according to Claim 1 wherein said process is conducted at about ambient temperature and pressure.

3. A process for solid state shear extrusion pulverization of according to Claim 1 wherein said polymeric material is heated to a temperature above ambient and below its decomposition temperature prior to applying said normal and shear forces and is cooled to about 20° to about 100°C immediately prior to or during applying said normal and shear forces.

4. A process for solid state shear extrusion pulverization according to Claim 1 wherein said polymeric material is of the type which thermally softens at a lower temperature than its melting temperature, said process comprising the further steps of heating said polymeric material to a pre-melt softening temperature below its melting point, cooling the heated polymeric material from said pre-melt softening temperature and then applying said normal and shear forces to produce said fine powder, and fluidizing said fine powder in a gas stream preventing its agglomeration.

5. A process for solid state shear extrusion pulverization according to Claim 4 wherein said polymeric material is heated to about 3° to about 50°C below said melting temperature and cooled to about 20° to about 100°C immediately prior to or during applying said normal and shear forces.

6. A process for solid state shear extrusion pulverization according to Claims 4 and 5 wherein said gas stream is at a lower temperature than said powder thereby further cooling said powder and said gas stream provides expansion of the fluidized powder by increase in the distance between flights of said meshing screws and/or by expanding the cross sectional open area between said meshing screws and a barrel housing said meshing screws.

7. A process for solid state shear extrusion pulverization according to Claim 4 wherein the reactivity of polymeric and solid monomeric materials is enhanced.

8. An apparatus for solid state shear extrusion pulverization of synthetic and natural polymeric materials comprising; a hollow generally converging barrel housing a generally converging twin screw extruder having generally converging conical meshing screws in at least the powder formation zone, feed means for feeding said polymeric material to a first zone at the large end of said barrel, discharge means for discharging pulverized powder from the opposite small end of said barrel, and generally converging conical meshing screw means for applying normal and shear forces sufficient to form fine powder from said polymeric material in a zone between said first zone and said opposite end of said barrel, characterized in that said apparatus comprises further means for fluidizing pulverized powder in a gas stream following said pulverization thereby preventing its agglomeration.

9. An apparatus for solid state shear extrusion pulverization according to Claim 8 additionally comprising heating means capable of heating said polymeric material to a temperature above ambient and below its decomposition or softening temperature prior to applying said normal and shear forces and cooling means capable of cooling the heated polymeric material to about 20° to about 100°C immediately prior to or during said applying of said normal and shear forces.

10. An apparatus for solid state shear extrusion pulverization according to Claims 8 or 9 additionally having fluidizing means for fluidizing said fine powder in a fluidizing zone downstream of applying said normal and shear forces, said fluidizing zone providing expansion of said powder by increase in the distance between flights of said meshing screws and/or by expanding the cross sectional open area between said meshing srews and said barrel housing.

## Patentansprüche

1. Verfahren zum Pulverisieren von festem synthetischem und natürlichem Polymer-Material, wobei das Polymer-Material hitzehärtbar ist, und dessen Schaume, Thermoplaste, elastomere natürliche Polymere oder Gemische derselben durch Abscher-Extrusion, wobei in einem Verfahrensschritt so grosse Normal- und Scherkräfte auf das Polymer-Material ausgeübt werden, dass ein feines Pulver daraus entsteht, mit Hilfe von gegenläufig rotierenden, im Ganzen gesehen konvergierend geformten Schrauben mit ineinandergreifendem Gewinde, wobei die Schrauben mit einer Drehzahl von 4 bis 90 Umdrehungen pro Minute angetrieben werden, dadurch gekennzeichnet, dass das feine Pulver aus den ineinandergreifenden Gewinden mittels eines Gasstromes in fliessfähigem Zustand herausbefördert wird.

2. Verfahren nach Patentanspruch 1, dadurch gekennzeichnet, dass das Verfahren bei etwa Umgebungstemperatur und Druck durchgeführt wird.

3. Verfahren nach Anspruch 1, dadurch gekennzeichnet, dass das Polymer-Material bis über die Umgebungstemperatur aber unter die Zersetzungstemperatur erhitzt wird, bevor es den Normal- und Scherkräften unterworfen wird und auf etwa 20°C bis 100°C abgekühlt wird, unmittelbar bevor oder während es den Normal- und Scherkräften ausgesetzt wird.

4. Verfahren nach Anspruch 1, wobei das Polymer-Material ein Material ist, welches bei Erwärmung weich wird, bevor es schmilzt, dadurch gekennzeichnet, dass das Polymer-Material in einem weiteren Schritt bis auf eine Temperatur unterhalb der Schmelztemperatur erhitzt und danach abgekühlt wird, bevor es den Normal- und Scherkräften unterworfen wird, um ein feines Pulver herzustellen und dass das feine Pulver mittels eines Gasstromes in fliessfähigen Zustand gebracht wird, um ein Zusammenklumpen zu verhindern.

5. Verfahren nach Anspruch 4, dadurch gekennzeichnet, dass das Polymer-Material bis auf eine Temperatur erhitzt wird, welche 3° bis 50°C unterhalb der Schmelztemperatur liegt und unmittelbar bevor es den Normal- und Scherkräften unterworfen wird auf etwa 20° bis 100°C abgekühlt wird.

6. Verfahren nach Anspruch 4 und 5, dadurch gekennzeichnet, dass der Gasstrom eine niedrigere Temperatur aufweist als das Pulver, so dass er das Pulver abkühlt und eine Expansion des fliessfähigen Pulvers bewirkt wird durch Vergrösserung des Abstandes zwischen den Gewindegängen der ineinandergreifenden Schrauben und/oder der freien Querschnittsfläche zwischen den Gewindegängen und der Gehäuseinnenwand.

7. Verfahren nach Anspruch 34, dadurch gekennzeichnet, dass die Reaktivität von polymeren und festen monomeren Materialien verbessert wird.

8. Vorrichtung zum Pulverisieren von synthetischen und natürlichen Polymer-Materialien mittels Feststoff-Abscher-Extrusion mit einem hohlen sich verengenden Gehäuse mit doppeltem Schraubenextruder in Form von konischen Schrauben, welche mindestens in der wirksamen Zone ein ineinandergreifendes Gewinde aufweisen, mit Zufuhrmitteln zum Zuführen von Polymer-Material in eine erste Zone am weiten Ende des Gehäuses und Auslassmitteln für das pulverisierte Pulver am gegenüberliegenden engen Teil des Gehäuses, wobei die konischen konvergierenden ineinandergreifenden Schrauben Mittel aufweisen, die Normal- und Scherkräfte ausüben, welche genügen, um das Polymer-Material zwischen der ersten Zone und dem gegenüberliegenden Ende des Gehäuses in ein feines Pulver zu verwandeln, dadurch gekennzeichnet, dass die Vorrichtung Mittel umfasst, um das feine Pulver in einen fliessfähigen Zustand zu bringen, um so ein Zusammenklumpen zu verhindern.

9. Vorrichtung nach Anspruch 8, dadurch gekennzeichnet, dass sie zusätzlich mit Mitteln versehen ist zum Aufheizen des Polymer-Materials auf eine Temperatur, welche über der Umgebungstemperatur und unterhalb der Zersetzungs- oder Erweichungstemperatur liegt, bevor es den Normal- und Scherkräften unterworfen wird, und dass Mittel zum Kühlen angeordnet sind, welche im Stande sind, das erhitzte Polymer-Material auf etwa 20° bis 100°C zu kühlen, unmittelbar bevor oder während es den Normal- und Scherkräften unterworfen wird.

10. Vorrichtung nach Anspruch 8 oder 9, dadurch gekennzeichnet, dass stromabwärts der Zone, in welcher die Normal- und Scherkräfte wirken, in einer Verflüssigungszone Verflüssigungsmittel angeordnet sind, welche das Pulver durch die Vergrösserung des Abstandes zwischen den Gewindegängen der ineinandergreifenden Schrauben und/oder der offenen Querschnittsfläche zwischen den ineinandergreifenden Schrauben und dem Gehäuse expandieren.

## Revendications

1. Procédé pour la pulvérisation par extrusion avec cisaillement à l'état solide de matière polymère synthétique et naturelle, dans lequel ladite matière polymère est thermodurcissable et ses mousses, thermoplastique, élastomère, naturelle, ou leurs mélanges, comprenant l'étape d'application des forces normales et de cisaillement suffisantes pour former une poudre fine de ladite matière polymère par des vis à engrènement en contrarotation de forme conique, convergentes de manière générale, tournant à environ 4 à environ 90 tours par minute, caractérisé en ce que ladite poudre fine est fluidisée dans un courant gazeux pour transporter ladite poudre hors des dites vis à engrènement.

2. Procédé pour la pulvérisation par extrusion avec cisaillement à l'état solide selon la revendication 1, dans lequel ledit procédé est conduit environ à température ambiante et sous pression ambiante.

3. Procédé pour la pulvérisation par extrusion avec cisaillement à l'état solide selon la revendication 1, dans lequel ladite matière polymère est chauffée à une température supérieure à la température ambiante et inférieure à sa température de décomposition avant qu'on y applique lesdites forces normales et de cisaillement et est refroidie à environ 20° à environ 100°C immédiatement avant ou pendant qu'on y applique lesdites forces normales et de cisaillement.

4. Procédé pour la pulvérisation par extrusion avec cisaillement à l'état solide selon la revendication 1, dans lequel ladite matière polymère est du type qui se ramollit thermiquement à une température inférieure à sa température de fusion, ledit procédé comprenant les étapes supplémentaires de chauffage de ladite matière polymère à une température de ramollissement de préfusion inférieure à son point de fusion, refroidissement de la matière polymère chauffée à partir de ladite température de ramollissement de préfusion et ensuite application des dites forces normales et de cisaillement pour produire ladite poudre fine, et fluidisation de ladite poudre fine dans un courant gazeux pour éviter son agglomération.

5. Procédé pour la pulvérisation par extrusion avec cisaillement à l'état solide selon la revendication 4, dans lequel ladite matière polymère est chauffée à environ 3° à environ 50°C en dessous de sa température de fusion et refroidie à environ 20° à environ 100°C immédiatement avant ou pendant l'application des dites forces normales et de cisaillement.

6. Procédé pour la pulvérisation par extrusion avec cisaillement à l'état solide selon les revendications 4 et 5, dans lequel ledit courant gazeux est à une température inférieure à celle de ladite poudre, refroidissant ainsi encore ladite poudre, et ledit courant gazeux procure une expansion de la poudre fluidisée par accroissement de la distance entre les pas des dites vis à engrènement et/ou par augmentation de l'aire de surface ouverte de la section transversale entre lesdites vis à engrènement et un cylindre formant une cage pour lesdites vis à engrènement.

7. Procédé pour la pulvérisation par extrusion avec cisaillement à l'état solide selon la revendication 4, dans lequel la réactivité des matières polymères et monomères solides est augmentée.

8. Appareil pour la pulvérisation par extrusion avec cisaillement à l'état solide de matières polymères synthétiques et naturelles comprenant: un cylindre creux généralement convergent entourant une extrudeuse à deux vis généralement convergentes ayant des vis à engrènement coniques convergentes de manière générale dans au moins la zone de formation de la poudre, des moyens d'alimentation de ladite matière polymère dans une première zone sur une extrémité large du dit cylindre, des moyens de décharge pour le déchargement de ladite poudre pulvérisée à partir de la petite extrémité opposée du dit cylindre, et des moyens en forme de vis à engrènement coniques, convergentes de manière générale, pour l'application de forces normales et de cisaillement suffisantes pour former une poudre fine à partir de ladite matière polymère dans une zone située entre ladite première zone et ladite extrémité opposée du dit cylindre, caractérisé en ce que ledit appareil comprend en outre des moyens pour la fluidisation de la poudre pulvérisée dans un courant gazeux à la suite de ladite pulvérisation de façon à éviter son agglomération.

9. Appareil pour la pulvérisation par extrusion avec cisaillement à l'état solide selon la revendication 8 comprenant en outre des moyens de chauffage capables de chauffer ladite matière polymère à une température supérieure à la température ambiante et inférieure à sa température de décomposition ou de ramollissement avant d'appliquer lesdites forces normales et de cisaillement et des moyens de refroidissement capables de refroidir la matière polymère chauffée à environ 20° à environ 100°C immédiatement avant ou pendant ladite application des dites forces normales et de cisaillement.

10. Appareil pour la pulvérisation par extrusion avec cisaillement à l'état solide selon les revendications 8 ou 9, ayant en outre des moyens de fluidisation pour la fluidisation de ladite poudre fine dans une zone de fluidisation en aval de l'application des forces normales et de cisaillement, ladite zone de fluidisation procurant une expansion de ladite poudre par accroissement de la distance entre les pas des dites vis à engrènement et/ou par expansion de l'aire ouverte de la section transversale entre lesdites vis à engrènement et ladite cage du cylindre.
